# EUROPEAN PATENT APPLICATION

(11) **EP 3 964 549 A1**
(43) Date of publication of application: **09.03.2022**
(21) Application number: 20799180.3
(22) Date of filing: 28.04.2020
(51) Int. Cl.: C08L 25/12, C08L 55/02, C08L 35/06, C08L 51/06

(54) **THERMOPLASTIC RESIN COMPOSITION AND MOLDED ARTICLE USING SAME**

(30) Priority: 30.04.2019 KR 20190050861
(71) Applicant: Lotte Chemical Corporation, Seoul, 05551 (KR)
(72) Inventor: YIM, Jeaseok, Uiwang-si, Gyeonggi-do 16073 (KR); HWANG, Donggeun, Uiwang-si, Gyeonggi-do 16073 (KR); KWON, Keehae, Uiwang-si, Gyeonggi-do 16073 (KR); CHOI, Woojin, Uiwang-si, Gyeonggi-do 16073 (KR)
(74) Representative: Germain Maureau
(86) International application number: PCT/KR2020/005632
(87) International publication number: WO 2020/222511

(57) **Abstract**

The present invention relates to a thermoplastic resin composition and a molded article using same, wherein the thermoplastic resin composition includes, relative to 100 parts by weight of a base resin including: (A) 25 wt% to 30 wt% of an acrylonitrile-butadiene-styrene graft copolymer; (B) 45 wt% to 55 wt% of an aromatic vinyl-vinyl cyanide copolymer; and (C) 20 wt% to 25 wt% of a maleimide-based copolymer, (D) 1 part by weight to 6 parts by weight of a polyolefin-aromatic vinyl-glycidyl (meth)acrylate graft copolymer.

## Description

### [Technical Field]

A thermoplastic resin composition and a molded article using the same are disclosed.

### [Background Art]

Styrene-based resins represented by acrylonitrile-butadiene-styrene copolymer (ABS) resins are widely used in automobiles, home appliances, and OA devices due to excellent moldability, mechanical properties, appearance, secondary workability, and the like.

Molded articles using the styrene-based resins may be widely applied to various products requiring painting/non-painting, for example, interior/exterior materials for automobiles and the like.

However, when the molded articles using the styrene-based resin come into contact with parts made of other resins such as polyethylene, polyvinyl chloride, and the like or other members such as lining sheets or foams made of a chloroprene rubber, a natural rubber, polyester, polyethylene, and the like, friction noises may occur.

The styrene-based resin is a non-crystalline resin and thus exhibits a higher friction coefficient than a crystalline resin such as polyethylene, polypropylene, polyacetal, and the like, and accordingly, for example, when fitted with members made of other resins such as an air conditioner vent in a car, a button in a car stereo, and the like, a stick-slip phenomenon may occur due to the high friction coefficient, causing friction noises (squeaking sound).

Recently, as a demand for electric vehicles, which generate relatively less noise than conventional vehicles when driven, increases, the friction noises may occur and thus impair comfort and quietness during the riding. Accordingly, there is a need to develop an automotive interior material with excellent friction noise reduction characteristics.

### [Disclosure]

### [Technical Problem]

The present invention provides a thermoplastic resin composition having improved friction noise reduction effects and mechanical properties, and a molded article using the same.

### [Technical Solution]

According to an embodiment, a thermoplastic resin composition includes, relative to 100 parts by weight of a base resin including (A) 25 wt% to 30 wt% of an acrylonitrile-butadiene-styrene graft copolymer, (B) 45 wt% to 55 wt% of an aromatic vinyl-vinyl cyanide copolymer, and (C) 20 wt% to 25 wt% of a maleimide-based copolymer, (D) 1 part by weight to 6 parts by weight of a polyolefin-aromatic vinyl-glycidyl (meth)acrylate graft copolymer.

The acrylonitrile-butadiene-styrene graft copolymer (A) may have a core-shell structure including a core made of a butadiene-based rubbery polymer, and a shell formed by graft polymerization of acrylonitrile and styrene onto the core.

The acrylonitrile-butadiene-styrene graft copolymer (A) may include 40 wt% to 70 wt% of the core relative to 100 wt% of the acrylonitrile-butadiene-styrene graft copolymer.

The acrylonitrile-butadiene-styrene graft copolymer (A) may have an average particle diameter of the rubbery polymer of 200 nm to 400 nm.

The aromatic vinyl-vinyl cyanide copolymer (B) may be a copolymer of a monomer mixture including 60 wt% to 80 wt% of an aromatic vinyl compound and 20 wt% to 40 wt% of a vinyl cyanide compound relative to 100 wt% of the aromatic vinyl-vinyl cyanide copolymer.

The aromatic vinyl-vinyl cyanide copolymer (B) may have a weight average molecular weight of 80,000 g/mol to 200,000 g/mol.

The aromatic vinyl-vinyl cyanide copolymer (B) may be a styrene-acrylonitrile copolymer.

The maleimide-based copolymer (C) may be an N-phenyl maleimide-styrene-maleic anhydride copolymer.

The maleimide-based copolymer (C) may have a glass transition temperature (Tg) of 150 °C to 200 °C.

The polyolefin-aromatic vinyl-glycidyl (meth)acrylate graft copolymer (D) may include an aromatic vinyl-glycidyl (meth)acrylate copolymer that is grafted onto a substituted or unsubstituted polyolefin main chain.

The polyolefin-aromatic vinyl-glycidyl (meth)acrylate graft copolymer (D) may include 70 wt% to 95 wt% of the substituted or unsubstituted polyolefin and 5 wt% to 30 wt% of the aromatic vinyl-glycidyl (meth)acrylate copolymer relative to 100 wt% of the polyolefin-aromatic vinyl-glycidyl (meth)acrylate graft copolymer.

The substituted or unsubstituted polyolefin may be at least one selected from polyethylene and an ethylene-vinyl acetate copolymer.

The aromatic vinyl-glycidyl (meth)acrylate copolymer may be a styrene-glycidyl methacrylate copolymer.

The styrene-glycidyl methacrylate copolymer may be a copolymer of a monomer mixture including 50 wt% to 95 wt% of styrene and 5 wt% to 50 wt% of glycidyl methacrylate.

The polyolefin-aromatic vinyl-glycidyl (meth)acrylate graft copolymer (D) may be at least one selected from a polyethylene-styrene-glycidyl methacrylate graft copolymer and an ethylene-vinyl acetate-styrene-glycidyl methacrylate graft copolymer.

The thermoplastic resin composition may further include at least one additive selected from a nucleating agent, a coupling agent, a filler, a plasticizer, a lubricant, a mold release agent, an antibacterial agent, a heat stabilizer, an antioxidant, an ultraviolet stabilizer, a flame retardant, an antistatic agent, a colorant, and an impact modifier.

On the other hand, a molded article using the thermoplastic resin composition according to the embodiment may be provided.

### [Advantageous Effects]

The thermoplastic resin composition according to an embodiment and a molded article using the same have improved friction noise reduction effect and mechanical properties, and thus may be widely applied to molding various products that are painted and unpainted and may also be usefully applied to applications such as interior materials of automobiles, for example, electric vehicles.

### [Brief Description of the Drawing]

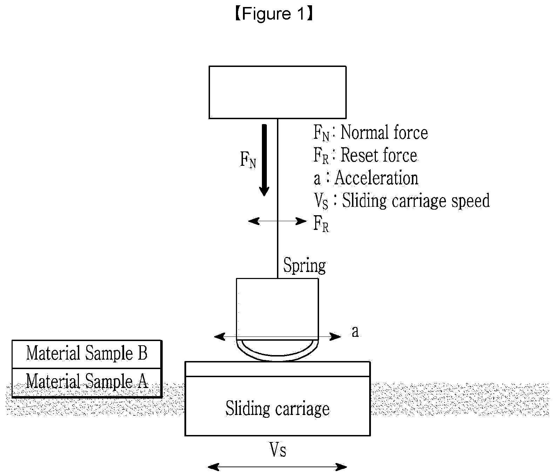

FIG. 1 is a schematic view of the basic principle of VDA230-206.

### [Mode for Invention]

Hereinafter, embodiments of the present invention are described in detail. However, these embodiments are just examples, and the present disclosure is not limited thereto and the present disclosure is defined by the scope of claims.

In the present invention, unless otherwise specified, the average particle diameter is a volume average diameter, and means a Z-average particle diameter measured using a dynamic light scattering analyzer.

According to an embodiment, a thermoplastic resin composition includes, relative to 100 parts by weight of a base resin including (A) 25 wt% to 30 wt% of an acrylonitrile-butadiene-styrene graft copolymer; (B) 45 wt% to 55 wt% of an aromatic vinyl-vinyl cyanide copolymer, and (C) 20 wt% to 25 wt% of a maleimide-based copolymer, (D) 1 part by weight to 6 parts by weight of a polyolefin-aromatic vinyl-glycidyl (meth)acrylate graft copolymer.

Hereinafter, each component of the thermoplastic resin composition is described in detail.

### (A) Acrylonitrile-Butadiene-Styrene Graft Copolymer

In an embodiment, the acrylonitrile-butadiene-styrene graft copolymer thermoplastic resin composition imparts excellent impact resistance to the thermoplastic resin composition. In an embodiment, the acrylonitrile-butadiene-styrene graft copolymer may have a formed core-shell structure including a core made of a butadiene-based rubbery polymer component and a shell formed by a graft polymerization reaction of acrylonitrile and styrene onto the core.

The rubbery polymer component constituting the core improves impact resistance especially at low temperatures, and the shell component lowers the interfacial tension to improve adhesion at the interface.

The acrylonitrile-butadiene-styrene graft copolymer according to an embodiment may be prepared by adding styrene and acrylonitrile to a butadiene-based rubbery polymer and performing graft copolymerization through a conventional polymerization method such as emulsion polymerization and bulk polymerization.

The butadiene-based rubbery polymer may be selected from a butadiene rubbery polymer, a butadiene-styrene rubbery polymer, a butadiene-acrylonitrile rubbery polymer, a butadiene-acrylate rubbery polymer, and a mixture thereof.

In the acrylonitrile-butadiene-styrene graft copolymer, an average particle diameter of the butadiene-based rubbery polymer may be, for example, 200 nm to 400 nm, for example 200 nm to 350 nm, or for example 250 nm to 350 nm. When the above range is satisfied, the thermoplastic resin composition may secure excellent impact resistance and appearance characteristics.

The butadiene-based rubbery polymer core may be included in an amount of 40 wt% to 70 wt% relative to 100 wt% of the acrylonitrile-butadiene-styrene graft copolymer. Meanwhile, the shell may be a styrene-acrylonitrile copolymer copolymerized from a monomer mixture in which the weight ratio of the styrene and the acrylonitrile is 6:4 to 8:2.

The acrylonitrile-butadiene-styrene graft copolymer may be included in an amount of 25 wt% to 30 wt%, for example, 26 wt% to 29 wt%, relative to 100 wt% of the base resin.

When the acrylonitrile-butadiene-styrene graft copolymer is included in an amount of less than 25 wt% in the base resin, excellent impact resistance may be difficult to accomplish, but when included in an amount of greater than 30 wt%, heat resistance and fluidity may be deteriorated.

### (B) Aromatic Vinyl-Vinyl Cyanide Copolymer

In an embodiment, the aromatic vinyl-vinyl cyanide copolymer may function to improve the fluidity of the thermoplastic resin composition and compatibility among the components at a predetermined level.

In an embodiment, the aromatic vinyl-vinyl cyanide copolymer may have a weight average molecular weight of greater than or equal to 80,000 g/mol, for example, greater than or equal to 85,000 g/mol, for example, greater than or equal to 90,000 g/mol, for example, less than or equal to 200,000 g/mol, for example, less than or equal to 150,000 g/mol, for example, 80,000 g/mol to 200,000 g/mol, or for example, 80,000 g/mol to 150,000 g/mol.

In the present invention, the weight average molecular weight is obtained by dissolving a powder sample in tetrahydrofuran (THF) and performing gel permeation chromatography (GPC) with a 1200 series made by Agilent Technologies Inc. (a column: LF-804 made by Shodex, a standard sample: polystyrene made by Shodex).

The aromatic vinyl compound may be at least one selected from styrene, α-methylstyrene, p-methylstyrene, p-t-butylstyrene, 2,4-dimethylstyrene, chlorostyrene, vinyltoluene, and vinylnaphthalene.

The vinyl cyanide compound may be at least one selected from acrylonitrile, methacrylonitrile, and fumaronitrile.

In an embodiment, the aromatic vinyl-vinyl cyanide copolymer may be a copolymer of a monomer mixture of an aromatic vinyl compound and a vinyl cyanide compound.

Herein, the aromatic vinyl compound may be included, for example, in an amount of greater than or equal to 60 wt%, for example, greater than or equal to 65 wt%, for example, greater than or equal to 70 wt%, for example, less than or equal to 80 wt%, for example, less than or equal to 75 wt%, for example, 60 wt% to 80 wt%, or for example, 65 wt% to 75 wt%, relative to 100 wt% of the aromatic vinyl-vinyl cyanide copolymer.

In addition, the vinyl cyanide compound may be included, for example, in an amount of greater than or equal to 20 wt%, for example, greater than or equal to 25 wt%, for example, less than or equal to 40 wt%, for example, less than or equal to 35 wt%, for example, 20 wt% to 40 wt%, or for example, 25 wt% to 35 wt%, relative to 100 wt% of the aromatic vinyl-vinyl cyanide copolymer.

In an embodiment, the aromatic vinyl-vinyl cyanide copolymer may be a styrene-acrylonitrile copolymer (SAN).

In an embodiment, the aromatic vinyl-vinyl cyanide copolymer may be included in an amount of 45 wt% to 55 wt%, for example, 47 wt% to 53 wt%, relative to 100 wt% of the base resin.

When the aromatic vinyl-vinyl cyanide copolymer is included in an amount of less than 45 wt%, formability of the thermoplastic resin composition may be deteriorated, and when included in an amount of greater than 55 wt%, mechanical properties of a molded article made by using the thermoplastic resin composition may be deteriorated.

### (C) Maleimide-based Copolymer

In an embodiment, the maleimide-based copolymer applies excellent heat resistance to the thermoplastic resin composition. The maleimide-based copolymer may be a terpolymer of N-phenyl maleimide, styrene, and maleic anhydride, which is prepared through an imidization reaction of the styrene and a maleic anhydride copolymer.

In an embodiment, the N-phenyl maleimide may be included in an amount of 10 wt% to 55 wt%, for example, 15 wt% to 55 wt%, or for example, 15 wt% to 50 wt%, relative to 100 wt% of the maleimide-based copolymer.

On the other hand, relative to 100 wt% of the maleimide-based copolymer in an embodiment, the styrene may be included in an amount of 40 wt% to 80 wt%, and the maleic anhydride may be included in an amount of 1 wt% to 10 wt%.

In the maleimide-based copolymer according to an embodiment, when the N-phenyl maleimide content is less than 10 wt%, the effect of improving heat resistance by the maleimide-based copolymer may rarely be expressed, and when the N-phenyl maleimide content is greater than 55 wt%, appearance characteristics of the thermoplastic resin composition and a molded article made by using the same may be significantly deteriorated.

A glass transition temperature (Tg) of the maleimide-based copolymer may be, for example, 150°C to 200 °C, for example, 160 °C to 200 °C, or for example, 170°C to 200 °C.

The maleimide-based copolymer may be included in an amount of 20 wt% to 25 wt%, for example, 21 wt% to 24 wt%, relative to 100 wt% of the base resin.

When the maleimide-based copolymer in the base resin is included within the above content ranges, heat resistance may be greatly improved, while maintaining a balance with other properties of the thermoplastic resin composition such as mechanical properties, formability, and the like, and accordingly, a molded article made by using the same may exhibit excellent heat resistance.

### (D) Polyolefin-Aromatic Vinyl-Glycidyl (meth)acrylate Graft Copolymer

In an embodiment, the polyolefin-aromatic vinyl-glycidyl (meth)acrylate graft copolymer may lower a friction coefficient of the thermoplastic resin composition and a molded article made by using the same, and also improve friction noise-reducing durability and thus exhibit excellent friction noise reduction characteristics.

In an embodiment, the polyolefin-aromatic vinyl-glycidyl (meth)acrylate graft copolymer may be an aromatic vinyl-glycidyl (meth)acrylate copolymer grafted onto a substituted or unsubstituted polyolefin main chain.

The substituted or unsubstituted polyolefin may be at least one selected from polyethylene and an ethylene-vinyl acetate copolymer. The ethylene-vinyl acetate copolymer may be a copolymer of ethylene and vinyl acetate.

The aromatic vinyl-glycidyl (meth)acrylate copolymer grafted onto the polyolefin main chain may be a copolymer of an aromatic vinyl compound and glycidyl (meth)acrylate.

The aromatic vinyl compound may be one or more selected from styrene, a C1 to C10 alkyl substituted styrene, a halogen-substituted styrene, vinyl toluene, vinyl naphthalene, and a mixture thereof. Specific examples of the alkyl substituted styrene may be α-methyl styrene, p-methyl styrene, o-ethyl styrene, m-ethyl styrene, p-ethyl styrene, p-t-butyl styrene, 2,4-dimethyl styrene, and the like.

The glycidyl (meth)acrylate may be any one or more selected from glycidyl acrylate, glycidyl methacrylate, and a mixture thereof.

The aromatic vinyl-glycidyl (meth)acrylate copolymer may include, for example, a copolymer of styrene and glycidyl acrylate, a copolymer of styrene and glycidyl methacrylate, a copolymer of α-methyl styrene and glycidyl acrylate, a copolymer of α-methyl styrene and glycidyl methacrylate, a copolymer of styrene, α-methyl styrene, and glycidyl acrylate, a copolymer of styrene, α-methyl styrene, and glycidyl methacrylate, or a copolymer of styrene, α-methyl styrene, glycidyl acrylate, and glycidyl methacrylate, and preferably, a copolymer of styrene and glycidyl methacrylate. Herein, the styrene-glycidyl methacrylate copolymer may be obtained by copolymerizing a monomer mixture including 50 wt% to 95 wt% of styrene and 5 wt% to 50 wt% of glycidyl methacrylate.

For example, the polyolefin-aromatic vinyl-glycidyl (meth)acrylate graft copolymer may be at least one selected from a group consisting of a polyethylene-styrene-glycidyl methacrylate graft copolymer (PE-g-SGMA) and an ethylene-vinyl acetate-styrene-glycidyl methacrylate graft copolymer (EVA-g-SGMA).

In an embodiment, the polyolefin-aromatic vinyl-glycidyl (meth)acrylate graft copolymer may include 70 wt% to 95 wt% of the substituted or unsubstituted polyolefin and 5 wt% to 30 wt% of the aromatic vinyl-glycidyl (meth)acrylate copolymer relative to 100 wt% of the polyolefin-aromatic vinyl-glycidyl (meth)acrylate graft copolymer.

The polyolefin-aromatic vinyl-glycidyl (meth)acrylate graft copolymer may be included, for example, in an amount of 1 part by weight to 6 parts by weight, for example, 2 parts by weight to 6 parts by weight, or for example, 2 parts by weight to 5 parts by weight, relative to 100 parts by weight of the base resin. When the polyolefin-aromatic vinyl-glycidyl (meth)acrylate graft copolymer is included in an amount of less than 1 part by weight, the friction noise-reducing characteristics of a molded article made by using the same may hardly be expressed, and when included in an amount of greater than 6 parts by weight, mechanical properties such as rigidity and the like may be deteriorated.

### (E) Other Additives

In addition to the components (A) to (D), the thermoplastic resin composition according to an embodiment may further include one or more additives in order to balance each property under the condition that both an excellent friction noise reduction effect and mechanical properties are maintained, or depending on the end use of the thermoplastic resin composition.

Specifically, the additive may be a nucleating agent, a coupling agent, a filler, a plasticizer, a lubricant, a mold release agent, an antibacterial agent, a heat stabilizer, an antioxidant, an ultraviolet stabilizer, a flame retardant, an antistatic agent, a colorant, and an impact modifier which may be used alone or in a combination of two or more.

The additive may be appropriately included within a range that does not impair the physical properties of the thermoplastic resin composition, and specifically, may be included in an amount of less than or equal to 20 parts by weight relative to 100 parts by weight of a base resin, but is not limited thereto.

The thermoplastic resin composition according to the present invention may be prepared by a known method for preparing a thermoplastic resin composition.

For example, the thermoplastic resin composition according to the present invention may be prepared in the form of pellets by simultaneously mixing the constituents of the present invention and other additives and then melt-kneading the mixture in an extruder.

A molded article according to an embodiment of the present invention may be manufactured from the aforementioned thermoplastic resin composition.

The thermoplastic resin composition has an excellent friction noise-reducing effect and mechanical properties and thus may be vastly applied to various products that are painted and unpainted, and particularly, vehicles largely requiring the friction nose reduction, for example, interior materials of an electrical vehicle and the like due to minimization of the stick-slip phenomenon.

Hereinafter, the present invention is illustrated in more detail with reference to examples and comparative examples. However, the following examples and comparative examples are provided for the purpose of descriptions and the present invention is not limited thereto.

### Examples 1 and 2 and Comparative Examples 1 to 4

The thermoplastic resin compositions according to Examples 1 and 2 and Comparative Examples 1 to 4 were prepared according to each component content ratio shown in Table 1.

In Table 1, (A), (B), and (C) included in a base resin are expressed by wt% relative to a total weight of the base resin, and (D), (D'), and (D") also included in the base resin are expressed by parts by weight relative to 100 parts by weight of the base resin.

The components shown in Table 1 were dry-mixed, and then quantitatively and continuously injected into a supply section of a twin-screw extruder (L/D = 36, ϕ = 45 mm) and fused/kneaded. Subsequently, the pelletized thermoplastic resin compositions through the twin-screw extruder were dried at about 80 °C for about 4 hours, and then prepared into specimens for evaluation of mechanical properties and specimens for evaluation of squeak noises of 100 mm x 100 mm x 3.2 mm (width x length x thickness), respectively, by using a 6 oz injection molding machine set at a cylinder temperature of about 220 °C and a mold temperature of about 60 °C.

**(Table 1)**

| | | Example 1 | Example 2 | Comparative Example 1 | Comparative Example 2 | Comparative Example 3 | Comparative Example 4 |
|---|---|---|---|---|---|---|---|
| Base resin | (A) | 27 | 27 | 27 | 27 | 27 | 27 |
| | (B) | 50 | 50 | 50 | 50 | 50 | 50 |
| | (C) | 23 | 23 | 23 | 23 | 23 | 23 |
| | (D) | 3 | 5 | - | - | - | - |
| | (D') | - | - | - | - | 3 | 5 |
| | (D") | - | - | - | 3 | - | - |

Each component provided in Table 1 is illustrated as follows.

### (A) Acrylonitrile-Butadiene-Styrene Graft Copolymer

An acrylonitrile-butadiene-styrene graft copolymer (Lotte Advanced Materials Co., Ltd.) butadiene rubbery polymer including about 58 wt% of a core formed of a butadiene rubbery polymer (an average particle diameter: about 250 nm) and a shell formed by graft polymerization of acrylonitrile and styrene onto the core was used.

### (B) Aromatic Vinyl-Vinyl Cyanide Copolymer

A styrene-acrylonitrile copolymer (Lotte Advanced Materials Co., Ltd.) copolymerized from a monomer mixture of about 28 wt% of acrylonitrile and about 72 wt% of styrene and having a weight average molecular weight of about 110,000 g/mol was used

### (C) Maleimide Copolymer

An N-phenyl maleimide-styrene-maleic anhydride copolymer having a glass transition temperature (Tg) of about 185 °C (Denka Co., Ltd.) was used.

### (D) Polyolefin-Aromatic Vinyl-Glycidyl Methacrylate Graft Copolymer

A polyethylene-styrene-glycidyl methacrylate graft copolymer in which a styrene-glycidyl methacrylate copolymer is grafted onto a polyethylene main chain (PE-g-SGMA, NOF Corporation) was used.

### (D') Polyethylene-Styrene-Acrylonitrile Graft Copolymer

A copolymer in which a styrene-acrylonitrile copolymer is grafted onto a polyethylene main chain (PE-g-SAN, NOF Corporation) was used.

### (D") Dimethylpolysiloxane

A dimethylpolysiloxane having a kinematic viscosity of about 100 cSt at 25 °C (Shin-Etsu Chemical Co., Ltd.) was used.

### Experimental Examples

The experimental results are shown in Table 3.
(1) Tensile Strength (MPa): Tensile strength of specimens for evaluating mechanical properties were measured according to ISO 527-1.
(2) Flexural Strength (MPa): Flexural strength of the specimens for evaluating mechanical properties were measured according to ISO 178.
(3) Flexural Modulus (MPa): A flexural modulus of the specimens for evaluating mechanical properties were measured according to ISO 178.
(4) Impact Resistance (kJ/m²): Izod impact strength of the specimens for evaluating mechanical properties was measured according to ISO 180.
(5) Squeak Noise: Squeak noises of the specimens for evaluating corresponding to the following condition 1 (a room temperature condition) and the following condition 2 (a severe condition) were measured according to VDA230-206.
   - Condition 1 (room temperature condition): The specimens were allowed to stand at room temperature without a separate heat treatment.
   - Condition 2 (severe condition): The specimens were allowed to stand in an about 80 °C oven for about 300 hours.

FIG. 1 is a schematic view of the basic principle of VDA230-206. Referring to FIG. 1, Material A and Material B were identical materials which were heat-treated under the same conditions, but Material A having a mobile phase relatively moved to Material B due to spring components. A force (F_{N}) applied to the materials due to the spring components was 40 N, a moving speed (Vₛ) of a sliding carriage was 4 mm/s, and a contact area of the two material specimens was 1250 mm². Herein, a movement phenomenon of the spring was caused by stick and slip, which was used to evaluate the squeak noises.

Table 2 shows references for evaluating the squeak noises, wherein as RPN is closer to 1, an effect of reducing the squeak noises is more excellent.

**(Table 2)**

| RPN | Rating | Meaning |
|---|---|---|
| 1 | OK | Material pair is safe. Audible noise development due to the stick-slip effect is not expected |
| 2 | OK | |
| 3 | OK | |
| 4 | Conditionally OK | Material pair is at threshold. Audible interference cannot be eliminated from the stick-slip effect |
| 5 | Conditionally OK | |
| 6 | Not okay | Material pair is critical with regard to stick-slip effect. Audible noises during relative movements must be expected |
| 7 | Not okay | |
| 8 | Not okay | |
| 9 | Not okay | |
| 10 | Not okay | |

Referring to Table 2, RPNs 1 to 3 indicate a state that there are almost no noises, and RPNs 4 and 5 indicate a limit point where the squeak noises are not removed by the stick-slip effect. In addition, RPNs 6 to 10 indicate a state that the stick-slip effect is obviously expressed.

**(Table 3)**

| | | Example 1 | Example 2 | Comparative Example 1 | Comparative Example 2 | Comparative Example 3 | Comparative Example 4 |
|---|---|---|---|---|---|---|---|
| Tensile strength (MPa) | | 50 | 49 | 50 | 43 | 51 | 50 |
| Flexural strength (MPa) | | 72 | 71 | 72 | 65 | 75 | 70 |
| Flexural modulus (MPa) | | 2100 | 2200 | 2500 | 2200 | 2300 | 2200 |
| Impact strength (kJ/m²) | | 14 | 13 | 16 | 18 | 15 | 13 |
| Squeak noise (RPN) | Condition 1 | 2 | 1 | 9 | 8 | 3 | 2 |
| | Condition 2 | 3 | 2 | 10 | 10 | 6 | 4 |

Referring to Tables 1 and 3, Examples 1 and 2 used an acrylonitrile-butadiene-styrene graft copolymer, an aromatic vinyl-vinyl cyanide copolymer, a maleimide-based copolymer, and a polyolefin-aromatic vinyl-glycidyl (meth)acrylate graft copolymer in each optimal content and thus provided a thermoplastic resin composition showing an excellent squeak noise-reducing effect and mechanical properties (impact resistance and rigidity) and a molded article using the same, compared with the comparative examples.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A thermoplastic resin composition, comprising,
relative to 100 parts by weight of a base resin comprising:
(A) 25 wt% to 30 wt% of an acrylonitrile-butadiene-styrene graft copolymer;
(B) 45 wt% to 55 wt% of an aromatic vinyl-vinyl cyanide copolymer; and
(C) 20 wt% to 25 wt% of a maleimide-based copolymer,
(D) 1 part by weight to 6 parts by weight of a polyolefin-aromatic vinyl-glycidyl (meth)acrylate graft copolymer.

2. The thermoplastic resin composition of claim 1, wherein
the acrylonitrile-butadiene-styrene graft copolymer (A) has a core-shell structure comprising
a core made of a butadiene-based rubbery polymer, and
a shell formed by graft polymerization of acrylonitrile and styrene onto the core.

3. The thermoplastic resin composition of claim 2, wherein the acrylonitrile-butadiene-styrene graft copolymer (A) comprises 40 wt% to 70 wt% of the core relative to 100 wt% of the acrylonitrile-butadiene-styrene graft copolymer.

4. The thermoplastic resin composition of any one of claim 1 to claim 3, wherein the acrylonitrile-butadiene-styrene graft copolymer (A) has an average particle diameter of the rubbery polymer of 200 nm to 400 nm.

5. The thermoplastic resin composition of any one of claim 1 to claim 4, wherein the aromatic vinyl-vinyl cyanide copolymer (B) is a copolymer of a monomer mixture including 60 wt% to 80 wt% of an aromatic vinyl compound and 20 wt% to 40 wt% of a vinyl cyanide compound relative to 100 wt% of the aromatic vinyl-vinyl cyanide copolymer.

6. The thermoplastic resin composition of any one of claim 1 to claim 5, wherein the aromatic vinyl-vinyl cyanide copolymer (B) has a weight average molecular weight of 80,000 g/mol to 200,000 g/mol.

7. The thermoplastic resin composition of any one of claim 1 to claim 6, wherein the aromatic vinyl-vinyl cyanide copolymer (B) is a styrene-acrylonitrile copolymer.

8. The thermoplastic resin composition of any one of claim 1 to claim 7, wherein the maleimide-based copolymer (C) is an N-phenyl maleimide-styrene-maleic anhydride copolymer.

9. The thermoplastic resin composition of any one of claim 1 to claim 8, wherein the maleimide-based copolymer (C) has a glass transition temperature (Tg) of 150 °C to 200 °C.

10. The thermoplastic resin composition of any one of claim 1 to claim 9, wherein the polyolefin-aromatic vinyl-glycidyl (meth)acrylate graft copolymer (D) comprises an aromatic vinyl-glycidyl (meth)acrylate copolymer that is grafted onto a substituted or unsubstituted polyolefin main chain.

11. The thermoplastic resin composition of claim 10, wherein
the polyolefin-aromatic vinyl-glycidyl (meth)acrylate graft copolymer (D) comprises
70 wt% to 95 wt% of the substituted or unsubstituted polyolefin and
5 wt% to 30 wt% of the aromatic vinyl-glycidyl (meth)acrylate copolymer
relative to 100 wt% of the polyolefin-aromatic vinyl-glycidyl (meth)acrylate graft copolymer.

12. The thermoplastic resin composition of claim 10 or claim 11, wherein the substituted or unsubstituted polyolefin is at least one selected from polyethylene and an ethylene-vinyl acetate copolymer.

13. The thermoplastic resin composition of any one of claim 10 to claim 12, wherein the aromatic vinyl-glycidyl (meth)acrylate copolymer is a styrene-glycidyl methacrylate copolymer.

14. The thermoplastic resin composition of claim 13, wherein the styrene-glicidyl methacrylate compolymer is a copolymer of a monomer mixture including 50 wt% to 95 wt% of styrene, and 5 wt% to 50 wt% of glycidyl methacrylate.

15. The thermoplastic resin composition of any one of claim 1 to claim 14, wherein the polyolefin-aromatic vinyl-glycidyl methacrylate graft copolymer (D) is at least one selected from a polyethylene-styrene-glycidyl methacrylate graft copolymer and an ethylene-vinyl acetate-styrene-glycidyl methacrylate graft copolymer.

16. The thermoplastic resin composition of any one of claim 1 to claim 15, wherein the thermoplastic resin composition further comprises at least one additive selected from a nucleating agent, a coupling agent, a filler, a plasticizer, a lubricant, a mold release agent, an antibacterial agent, a heat stabilizer, an antioxidant, an ultraviolet stabilizer, a flame retardant, an antistatic agent, a colorant, and an impact modifier.

17. A molded article comprising the thermoplastic resin composition of any one of claim 1 to claim 16.
